# EUROPEAN PATENT SPECIFICATION

(11) **EP 1 447 973 B1**
(45) Date of publication and mention of the grant of the patent: **27.06.2007**
(21) Application number: 04100497.9
(22) Date of filing: 10.02.2004
(51) Int. Cl.: H04N 1/62, G06K 9/00

(54) **Image editing apparatus, image editing method and program**
Vorrichtung, Verfahren und Programm zur Bearbeitung von Bilddaten
Dispositif, procédé et logiciel pour le traitement d'images

(30) Priority: 12.02.2003 JP 2003033485
(43) Date of publication of application: 18.08.2004
(73) Proprietor: OMRON CORPORATION, Kyoto-shi, Kyoto 600-8530 (JP)
(72) Inventor: Lao, Shihong OMRON Corp. 801 Manamifudodo-cho, Kyoto-shi Kyoto 600-8530 (JP)
(74) Representative: Weihs, Bruno Konrad

(56) References cited:
- EP-A- 0 927 952
- EP-A- 1 014 172
- EP-A- 1 372 109
- US-A- 5 296 945
- US-A1- 2001 005 222
- US-A1- 2001 035 988
- US-A1- 2002 015 514
- GUTTA S ET AL: "Gender and ethnic classification of face images" AUTOMATIC FACE AND GESTURE RECOGNITION, 1998. PROCEEDINGS. THIRD IEEE INTERNATIONAL CONFERENCE ON NARA, JAPAN 14-16 APRIL 1998, LOS ALAMITOS, CA, USA,IEEE COMPUT. SOC, US, 14 April 1998 (1998-04-14), pages 194-199, XP010277619

## Description

### BACKGROUND OF THE INVENTION

### 1. Field of the Invention

The present invention relates to an image editing apparatus for performing the process of retrieving and correcting an image generated by a predetermined image pickup device and outputting a corrected image, or in particular to a technique for inputting an image of a person picked up and correcting the face image of the object.

### 2. Description of the Background Art

In recent years, a technique has been disclosed by Japanese Unexamined Patent Publications Nos. 10-268447, 8-62741 and 11-146405, in which an image area corresponding to the face of an object is detected from the picked-up image of the object person, and based on the feature amounts within the particular area, the image pickup conditions such as the exposure amount are adjusted or the picked-up image is corrected.

In Japanese Unexamined Patent Publication No. 10-268447, for example, a photograph is printed using the image data retrieved from an image pickup device in such a manner that the face area of a person is detected from the image data and corrected by determining the exposure amount based on the light measurement data in the particular area thereby to correct the image in accordance with the features of the face image.

In Japanese Unexamined Patent Publication No. 8-62741, on the other hand, the process of printing out an image picked up by a camera is executed in such a manner that a skin color area corresponding to the face image is detected from an image to be processed, and based on the brightness information of the image, the degree of back light is determined so that the gradation is corrected in different ways in accordance with the degree of back light and the presence of a person.

In Japanese Unexamined Patent Publication No. 11-146405, there is provided an image signal processing apparatus such as a color video camera, in which a skin color area is detected in the process of retrieving the video signal, and upon detection of the skin color area, the video signal is corrected in brightness and color thereby to correct only the skin color area. Further, U.S. Patent Publication No. 2002/005002 discloses an automatic correcting device that has a skin pigmentation correction value calculating part that computes correction values according to the colors of skin pigmentation area abstracted from an image and a color correcting part corrects the colors of skin pigmentation area based on the correction values. U.S. Patent Publication No. 2002/015514 discloses an image processing method that applies image processing to an inputted image data. U.S. Patent Publication No. 2001/035988 discloses a color image processing apparatus capable of changing/converting an inadequate-exposure image into an apparently natural image.

In all the conventional correction processes including the aforementioned techniques, the feature amounts such as the brightness and color of the face image are probably compared with a predetermined reference to determine correction parameters. The correction reference, however, is determined according to the skin color of a predetermined race. Therefore, the correction process for an object of any other race may be executed correctly inconveniently.

In the case where the correction reference is set according to a yellow person, for example, the correction parameters for the back light may be erroneously used for a black person as an object. Since the face image of the black person is considerably different from the face image under back light, however, the proper correction process is difficult to execute. In the case where a white person is an object, on the other hand, the correction process similar to that for the yellow person would lead to an unnatural image of a yellowish skin color.

The difference in age or sex, like the difference in race, may not be met simply by unified correction parameters. Between the face images of persons in twenties and forties, for example, the points to be corrected and the reference to be employed may be considerably different. Also, different standards of desirable face color are considered to generally apply to objects of male and female.

Further, different persons like different face colors and lightness, and the standards of preferences are varied probably depending on the latest fashion or the current season. The face images of individual objects having various different factors as described above cannot be easily corrected simply by the unified reference employed in the prior art.

Furthermore, in the conventional photo printing service (DPE), the whole image can be corrected, but each of the objects making up the image is not individually corrected.

### SUMMARY OF THE INVENTION

In view of these problems, the object of this invention is to provide an image editing apparatus, an image editing method and a program, in which the correction process suitable for each object can be executed in accordance with the race, sex, age and personal preferences of individual objects.

According to a first example, there is provided an image editing apparatus comprising an image input part for inputting a picked-up image of a person, a face image detection part for detecting a face image of an object contained in the input image, an inference part for inferring the attributes of the face image based on the feature amounts within the image area containing the face image detected by the face image detection part, a determining part for determining the contents of the process of correcting the face image based on the result of inference by the inference part, a face image correction part for executing the process of correcting the face image in accordance with the contents determined by the determining part, and an image output part for outputting an image corrected by the face image correction part.

The attributes described above include the information on at least one of the race, age and sex obtained from the face image of the object.

The image editing apparatus described above preferably comprises a computer as a main control unit having built therein a program corresponding to the functions of the part described above. Also, the image input part includes an interface circuit for retrieving an image from an external source. Similarly, the image output part includes the hardware for outputting an image externally.

The image input part is preferably supplied with a digital image data. Nevertheless, an analog image signal may alternatively be input from an analog video camera with equal effect. In this case, the image input part includes an A/D converter circuit for converting the analog image signal into a digital signal for each frame as well as an interface circuit.

The face image detection part scans a search area of a predetermined size on the input image, for example, and detects a face image by a method of making search as to whether the input image includes the feature points indicating the features of the organs making up the face. In this search operation, the face image can be detected with high accuracy by executing the feature point detection process described in Japanese Unexamined Patent Publication No. 2001-16573. The invention, however, is not limited to this method, but the face image may be detected also by the conventional method of detecting the skin color area or the simple pattern matching process.

The inference part can determine with high accuracy the race, age and sex by the arithmetic operation using the feature points making up the face organs. The race can be estimated, for example, by the method disclosed in Gregory Shakhnarovich, Paul A. Viola, Baback Moghaddam: "A Unified Learning Framework for Real Time Face Detection and Classification", Proceedings of the Fifth IEEE International Conference on Automatic Face and Gesture and Gesture Recognition, US Institute of Electrical and Electronics Engineers (IEEE), May 2002 (hereinafter referred to as the first non-patent reference). Nevertheless, a method for detecting the brightness distribution in the face image is also usable. Further, the age and sex can be estimated by the method disclosed in Satoshi Hosoi, Erina Takikawa and Masato Kawade, "Sex and Age Estimation System by Gabor Wavelet Transform and Support Vector Machine", Proceedings of 8th Image Sensing Symposium, Image Sensing Technology Research Society, July 2002 (hereinafter referred to as the second non-patent reference).

The feature amounts used for the inference process described above are acquired mainly from the face image detection area. Nevertheless, the feature amounts of the whole or a part of the image and the peripheral area of the face image may also be covered. The feature amounts thus detected may include the mean and variance of color and lightness and the intensity distribution of the face image, and the difference in color and lightness with the surrounding image. Also, by applying these feature amounts to a predetermined calculation formula, the secondary feature amounts required for inference can be obtained.

The processes of various contents can be set as the processes to be executed according to the invention, and include the process for correcting the intensity and lightness of each color component (three primary colors of red, green and blue, for example) to adjust the skin color, the process for detecting and erasing defects of the face surface and the process for smoothing the skin. In order to determine the contents of the process for correcting the face image based on the inference result described above, preferably, a setting table is prepared indicating the correspondence, for each correction item, between a set value of a parameter (hereinafter referred to as the "correction parameter") required to execute the correction and an element to be inferred, and by comparing the result of the inference process with the setting table, a correction parameter corresponding to the inference result is deduced.

Take the skin color adjustment as an example. The change ratio of each color component can be set as a correction parameter. In the setting table used for this purpose, preferably, the race, age and sex are each classified into a plurality of categories (for example, "white person", "yellow person" and "black person" for the race, and "teens", "twenties" and "thirties" for the age), and the combination of the correction parameter values for each color component is varied from one combination of these categories to another.

With the image editing apparatus described above, the correction of the contents suitable for the object is selected out of a plurality of correction processes set as references in respect of any one of at least the race, age and sex, and the face image can be corrected based on these correction contents. Specifically, the contents of correction are automatically selected in accordance with the race, age and sex of individual objects so that the correction suitable for a particular object is carried out.

According to a second example, there is provided an image editing apparatus comprising an image input part and a face image detection part similar to those of the image editing apparatus according to the first example, a registration part for holding the registered information including the features amount of the face image of each of a predetermined number of objects and the information required for correcting the face image, on the one hand, in correspondence with the identification information unique to each of the objects, on the other hand, an inference part for comparing the feature amounts of the face image detected by the face image detection part with the information registered in the registration part thereby to estimate the object, a face image correction part for executing the process of correcting the detected face image using the registered information of the object estimated by the inference part, and an image output part for outputting the image corrected by the face image correction part.

The image editing apparatus having this configuration, like the image editing apparatus according to the first example, preferably comprises a computer as a main control unit. The image input part, the face image detection part and the image output part may be configured similarly to the corresponding ones, respectively, of the image editing apparatus according to the first example.

The registration part may constitute a data base set in the internal memory of the computer. The "information required for correcting the face image" include, for example, parameters (such as the gradation and lightness of R, G, B making up the face color) for specifying the color of the face image, which are preferably adjusted to the color desired by the object to be registered. The identification information unique to the object, on the other hand, is defined preferably as the information such as the name (not necessarily the full name but may be a nick name or the like) of the object by which the photographer or the object can be readily identified.

The desirable feature amounts of the face image to be registered are those indicating the relative positions of the feature points of the face organs. The feature amounts indicated by Equation (1) of Japanese Unexamined Patent Publication No. 2001-16573, for example, may be determined and registered for each feature point constituting the face image.

The inference part can estimate who a particular object is by the process of comparing the feature amounts of the detected face image with the feature amounts of the face image of the object registered in the registration part. The face image correction part can correct the face image based on the correction contents included in the registered information of the estimated object.

With the image editing apparatus according to the second example, the feature amounts of the face image of a person expected to be an object and the information required for correcting the face image optimally are registered in advance, so that each time the face image of the person is processed, the face image can be corrected by a method desired by the object.

Next, an embodiment that can be shared by the image editing apparatuses according to the first and second examplesis explained. According to one embodiment, the face image detection part includes a part for rectifying the face image detection result in response to the operation for rectifying the result of detection of the face image.

Preferably, in the operation for rectifying the face image detection result, the face image detection result for the input image is displayed, and on this display screen, the operation of changing the face image detection position, changing the face image detection range and deleting a predetermined face image can be performed. The face image detection result can be displayed by arranging pointers at the position on the image where the face image is detected. In a more preferable method, a marking is indicated (for example, a frame image is set to define the face image) to clarify the position and size of the face image.

According to this embodiment, an erroneous inference process and the resultant error in the subsequent process can be avoided which otherwise might be caused by an error in the face image detection result. Also, the operation of deleting the face image is performed in such a manner that in the case where the face image of a person other than the object is contained, for example, the face image detection result for the particular person other than the object is deleted, or otherwise the face image not required to determine the subsequent inference process or the correction contents is deleted. In this way, only the object can be processed in detail.

In an image editing apparatus according to another embodiment, the inference part includes a part for rectifying the inference result in response to the operation for rectifying the inference result.

In the operation for rectifying the inference result, preferably, the inference result is displayed, and on the screen thus displayed, erroneous inference information is designated and rectified or unnecessary inference information is deleted. Further, new information not inferred may be added.

According to this embodiment, the process of determining the correction contents can be executed after rectifying the error in the inference result, and therefore the correction contents suitable to an object can be selected with higher accuracy.

In an image editing apparatus according to still another embodiment, the face image correction part includes a part which operates in response to the operation for rectifying the contents of correction after the correction process and recorrects the face image based on the contents thus rectified. Also, the image output part outputs an image obtained by the latest correction process at a particular time point in accordance with the finalize operation.

With regard to the operation of rectifying the correction contents, preferably, the image after correction and the information on the contents of the correction executed (such as the correction parameters described above) are displayed, and on this display screen, predetermined contents of correction are designated and rectified. The finalize operation can also be carried out on the screen displaying the same corrected image.

According to this embodiment, as long as the corrected image is not desirable, the user can recorrect the image by the rectify operation. Finally, at the time point when the desired corrected image is acquired, the finalize operation is performed. In this way, the image obtained by the latest correction can be output.

According to a third example, there is provided an image editing apparatus comprising an image input part for inputting an image picked up of a person, a face image detection part for detecting the face image of an object contained in the input image, an information input part for inputting the information on the contents of the process of correcting the face image of the object, a face image correction part for executing the process of correcting the face image detected by the face image detection part, according to the contents based on the information input by the information input part, and an image output part for outputting the image corrected by the face image correction part.

The image editing apparatus according to the third example also preferably comprises a computer as a main control unit. The image input part, the face image detection part and the image output part may be similar to the corresponding ones of the image editing apparatuses according to the first and second examples . The information input part can be configured of an operating unit (keyboard, mouse, etc.) for inputting specific contents of correction of the detected face image, a computer having built therein a user interface for presenting a menu of correction items to support the input process, and a display unit for displaying the menu.

With this apparatus, the user, after inputting the image to be processed to the apparatus, inputs the information indicating the contents of correction of the object. Then, the face image to be corrected is detected automatically, and the correction process based on the input information is executed. As a result, the correction having the contents intended for by the user can be easily and positively carried out. In the case where an image having a plurality of persons as objects is processed, preferably, the face image detection result for each object is displayed and checked by the user, after which the information indicating the contents of the correction process is received for each object. The contents of correction can be input by the operation of rectifying the displayed input image directly using the functions of the image editing software or the like.

Also in the image editing apparatus according to the third example, as in the image editing apparatuses according to the first and second example, the detection result is rectified in response to the operation for rectifying the face image detection result. Also, the image corrected by the image correction part may be recorrected in accordance with the operation for rectifying the contents of correction, and in response to the finalize operation, the image obtained by the latest correction process at the particular time point can be output.

Further, the image editing apparatuses according to the first and third example may comprise a registration processing part for registering in a memory the feature amounts of the face image detected by the face image detection part, in corresponding with the contents of the correction executed by the image correction part. In this case, the face image detection part is adapted to detect the face image from the input image by the search process, in accordance with the operation for designating the predetermined registered information, using the feature amounts contained in the registered information thus designated. Also, the face image correction part is adapted to, upon detection of the face image by the search process, execute the process of correcting the detected face image according to the contents of the correction process included in the designated registered information. Incidentally, the information is registered by the registration processing part in an internal memory of the computer making up the image editing apparatus.

Also in these examples , the desired feature amounts of the face image to be registered preferably indicate the relative positions of the feature points of the face organs. Each registered information, as in the image editing apparatus according to the second example, is preferably identifiable by the identification information (such as the name or the like information as in the image editing apparatus according to the second aspect) unique to each object. Also, the registered information can be designated, for example, by inputting the identification information for the predetermined registered information.

With this configuration, an object that has been corrected in the past is registered with the correspondence between the feature amounts of the face image and the contents of correction thereof. When an image containing the same object is input subsequently, a face image corresponding to the particular object is detected by designating the registered information for the object, and thus can be corrected in the same way as in the preceding correcting session. As a result, the processing speed is increased on the one hand, and the correction intended for by the user can be positively carried out according to the past processing contents.

The information of all the objects processed in the past are not necessarily registered in the memory. Alternatively, in response to the operation of selecting, made after correction, whether the registration is to be made or not, for example, and only when the registration is selected, the registration process may be executed.

Further, in each of the image editing apparatuses according to the first to third examples , the image detection part may be so configured that when an image linked with the information indicating the position of the face image of an object is input from the image input part, the face image is detected based on the link information.

An image linked with the information indicating the position of the face image can be generated by an image pickup device having a part similar to the face image detection part according to this invention. The link information may include the size and direction as well as the position of the face image. With this configuration, the face image is readily detected based on the link information of the input image.

In the case where the image pickup device has the same function as the inference part according to this invention, an image linked with the result of inference of the race, age and sex of the object in addition to the detected position of the image face can be generated. By inputting this image, the detection process of the face image can be easily executed, and skipping the inference process, the face image can be corrected quickly.

Further, in the image editing apparatuses according to the first to third examples , the image output part can be used also as a part for printing the corrected image. With this configuration, once an image desired to be printed as a photo by the user is input, the image is printed after the correction process suitable for the object, thereby making it possible to produce a photo having clearly grasped the features of the face of the object.

Each of the image editing apparatuses according to the first to third examples (including each of the embodiments) may be configured to input and correct a digital still image from a storage medium such as a digital camera, a scanner or a memory card, print the corrected image and store it in a storage medium.

Further, in each of the image editing apparatuses according to the first to third examples , the image input part may be configured as a part for receiving an image to be processed, transmitted through a computer network. In this case, the image output part can be configured as a part for printing the corrected image or a part for transmitting the corrected image to a transmitter or a destination designated by the transmitter through the computer network.

In the case where the apparatus is configured to be operable with a network as described above, the apparatus is required to establish communication with a user terminal through a computer network to operate in response to the operation of rectifying the face image detection result or the inference result, the operation of rectifying the corrected image and the finalize operation. Also, the information input part of the image editing apparatus according to the second example is similarly required to be configured to operate in response to the information input by communication through a computer network.

With this configuration, an image correction request can be received from the user so that a corrected image can be printed and sent back to the user through the computer network. The corrected image may also be transmitted to the user or a destination designated by the user through the computer network. In this case, the use of a general-purpose network such as the internet makes it possible to receive the images transmitted from a multiplicity of unspecified users. Nevertheless, the image transmitters may be limited to the registered users on membership basis.

In the image editing apparatuses according to the first to third examples , the image input part can be configured to retrieve dynamic image data. In such a case, the output part for outputting a corrected image may be configured as a part for storing an image in an image storage medium such as a DVD (digital video disk). As an alternative, a dynamic image display part may be used for outputting the corrected images sequentially to a predetermined display unit.

With the image editing apparatus having the configuration described above, the proper process for correcting the face image can be executed on each frame of the images making up the dynamic image. In the image detection process, assume that a face image of the object is tracked using the feature amounts of the face image detected in the preceding frame. Then, a similar correction process can be executed for the same object, and therefore, the inconvenience of the face image being changed is avoided even when the object moves. Thus, a high-quality dynamic image is acquired.

According to another example, there is provided an image editing method comprising the steps of inputting an image picked up of a person, detecting a face image of an object contained in the input image, executing the inference process for the attributes of the face image based on the feature amounts within an image area containing the detected face image, determining the contents of the correction process for the face image based on the inference result of the inference process, executing the correction process for the face image according to the determined contents of the correction process, and outputting a face image corrected.

According to still another example, there is provided an image editing method comprising the steps of inputting an image picked up of a person, detecting a face image of an object contained in the input image, estimating an object contained in the input image by comparing a data base having registered therein the feature amounts of the face image of each of a predetermined number of objects and the information required for correcting the face image, with the feature amounts of the detected face image, correcting the face image of the estimated object using the information required for correction registered in the data base, and outputting a corrected face image.

According to yet another example, there is provided an image editing method comprising the steps of inputting an image picked up of a person, detecting a face image of an object contained in the input image, receiving the input of the information indicating the contents of the process of correcting the face image of the object, executing the correction process for the detected face image according to the contents based on the input information, and outputting a corrected face image.

The image editing methods according to the aspects described above can be implemented by a program incorporated in a computer for executing each step. Each of these methods can be carried out by a general-purpose computer such as a personal computer as well as an apparatus intended for image editing. Further, these methods can be implemented by a server system for executing the editing process by receiving the image transmitted from each terminal of a computer network like an internet.

Also, the invention may be a program executed in an image editing apparatus.

### BRIEF DESCRIPTION OF THE DRAWINGS

Fig. 1 shows a block diagram of a configuration of an image editing apparatus according to this invention.

Fig. 2 shows the functions set in the CPU of the image editing apparatus in Fig. 1.

Fig. 3 shows an example of display of the face area detection result.

Fig. 4 shows a flowchart of a series of steps of the image editing process.

Fig. 5 shows an example of parameters for setting a face area.

Fig. 6 shows histograms of the brightness distribution in a face area for different races or illuminating conditions.

Fig. 7 shows a flowchart of the steps of correcting an image using the registered information.

Fig. 8 shows a flowchart of the steps of correcting an image using the registered information.

Fig. 9 shows a block diagram of a configuration of an image editing system according to this invention.

### DESCRIPTION OF THE PREFERRED EMBODIMENTS

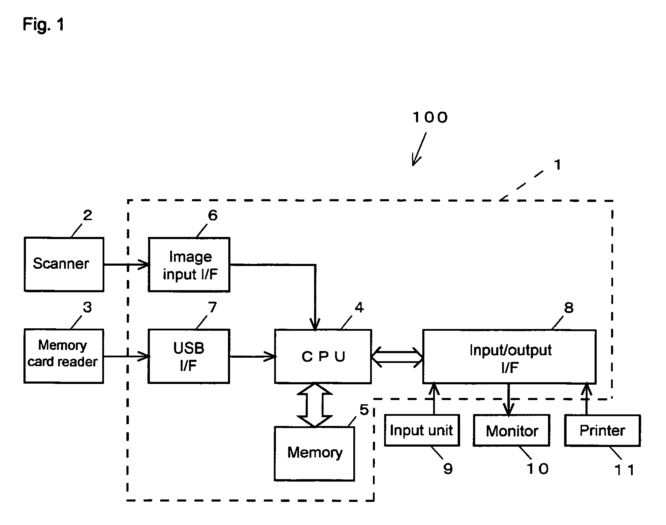

Fig. 1 shows a configuration of an image editing apparatus according to this invention.

The image editing apparatus 100 is installed in a shop providing the photo printing service. The image picked up by a digital camera of a customer or an image read from a printed photo is corrected, and the image thus corrected is printed. The image editing apparatus 100 may be operated either by a shop attendant or by a customer as a self-service machine (in the description that follows, the person who operates the apparatus is called "the user").

The image editing apparatus 100 comprises a main unit 1 including a computer connected with peripheral devices such as an image scanner 2 (hereinafter referred to simply as "the scanner 2"), a memory card reader 3, an input unit 9, a monitor 10 and a printer 11. The scanner 2 is not limited to the type for reading a printed photo, but may be a film scanner exclusively used for reading a film.

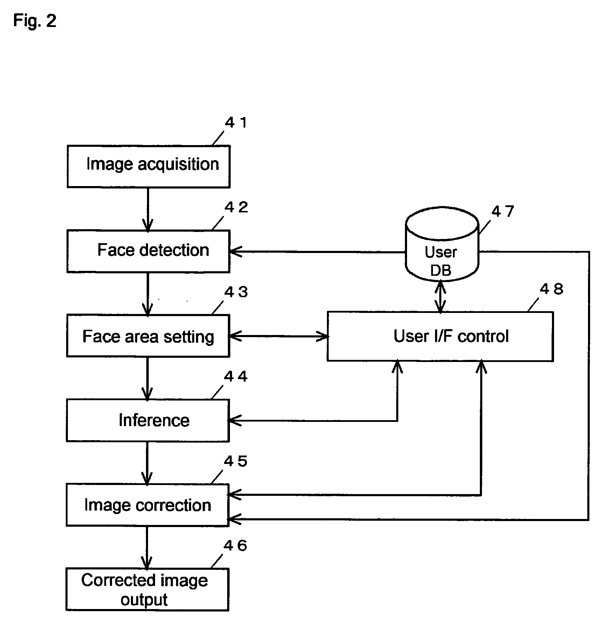

The main unit 1 includes a CPU 4, a memory 5, an image input interface 6, a USB interface 7 and an input/output interface 8. The memory 5 is a large-capacity memory such as a hard disk, and the CPU 4 includes a ROM or a RAM. The memory 5 has stored therein an operating system such as Windows (registered trade mark), a program corresponding to each processing unit shown in Fig. 2, a user data base 47 and a setting table for deducing the contents of correction. Further, a working area for temporarily storing the image to be processed is set in the memory 5.

The image input interface 6 is for connecting the scanner 2 to the CPU 4. The USB interface 7 is the one based on the Universal Serial Bus standards and used for connecting the memory card reader 3 to the CPU 4. The USB interface 7 may be used also to connect a digital camera instead of the memory card reader 3 to the CPU 4.

The input/output interface 8 is used for connecting the input unit 9, the monitor 10 and the printer 11. The monitor 10 and the printer 11 are based on the standards corresponding to the color image. The input unit 9 is configured of a keyboard and a mouse.

The CPU 4 selects the scanner 2 or the memory card reader 3 for input and, retrieving the digital image data from the scanner 2 or the memory card reader 3 thus selected, executes the correction process described later. The image after correction is displayed on the monitor 10 and output to the printer 11 in accordance with the print designating operation of the input unit 11, so that the printing process is executed.

In this configuration, the functions as shown in Fig. 2 are set in the CPU 4 by the program held in the memory 5. By these functions, assume that the image editing apparatus 100 according to this embodiment retrieves an image containing a face image of a person. The position and size of the face image are specified, the race, age and sex of the person constituting an object are estimated, the correction parameters suitable for the estimation result are determined, and thus the face image of the object is corrected.

In Fig. 2, an image acquisition unit 41 retrieves a digital image from the scanner 2 or the memory card reader 3 as an image to be processed, and stores it in the working area. A face detection processing unit 42 detects a face image of the object from the image to be processed. A face area setting unit 43 sets an area of a predetermined size including the face image in accordance with the result of face image detection. This area is where the inference process and the correcting process are executed, and is referred to as "the face area".

An inference processing unit 44 infers the race, age and sex of the object based on the feature amounts in the face area thus set. An image correction processing unit 45 determines the contents of the correction suitable to the result of the inference process, and based on the contents thus determined, executes the correction process. A corrected image output unit 46 outputs a corrected image to the monitor 10 or the printer 11.

According to this embodiment, the process is executed for correcting the gradation of R, G, B to adjust the skin color and correct the brightness under back light as a standard correcting process. In this embodiment, the race and age are each classified into a plurality of categories in advance, and each time any of the categories, the sex and the presence or absence of back light are combined, a correction item is set (for example, "the correction of a white woman in twenties without back light", "the correction of a yellow man in thirties with back light", etc.). For each of these items, a setting table is prepared in which the amount or ratio of changing each gradation is set as a correction parameter, and held in the memory 5. The image correction processing unit 45 compares the inference result of the inference processing unit 44 with the setting table and thus can read the correction parameter in accordance with the inference result.

The user data base 47 is for accumulating the feature amounts of the face image before correction in correspondence with the contents of correction for the face images processed in the past by the image editing apparatus 100. The information registered in the user data base 47, as described later, are used for the face detection and the image correction processing. Each registered information is assigned index information including a name and an identification code of an individual person corresponding to the face image.

The user interface control unit 48 checks the result of setting of the face area, the inference result and the image correction result, and rectifies an error, if any, or inputs additional information. Also, the user interface control unit 48 supports the finalize operation for the corrected image using the input unit 9 and the monitor 10. Further, the user interface control unit 48 supports the operation of registering the information on the processed face image in the user data base 47 and the operation of accessing the user data base 47 for the registered information usable when processing a new image to be processed. Furthermore, according to this embodiment, the user interface control unit 48 supports the operation of designating an optional correction item other than the standard correction described above and setting a related correction parameter.

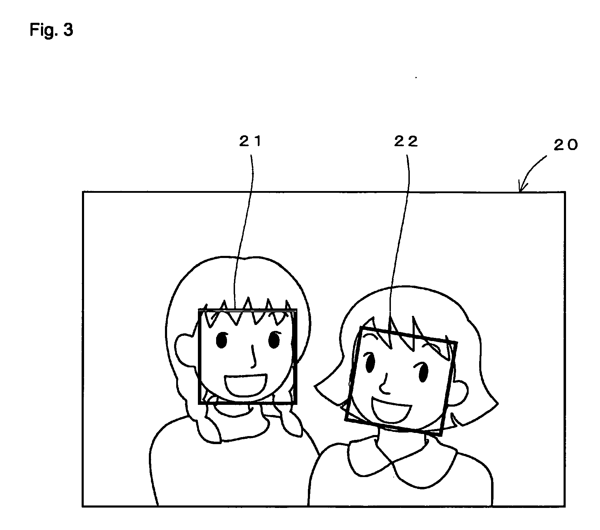

Fig. 3 shows an example display of the result of the face detection process, in which frame images 21, 22 corresponding to the boundary lines of the respective face areas are displayed on the face image of each person in the image 20.

The user interface control unit 48, with this display, sets an operation screen for rectifying the setting of the face area and the operation of setting a new face area. In response to these various operations, the contents of the operations are output to the face area setting unit 43. The face area setting unit 43, in accordance with the contents of each operation, rectifies the position and size of the face area thus set, deletes the unrequired face area or sets a new face area.

The inference result and the correction parameters are also rectified by displaying the image in similar fashion. According to this embodiment, the user interface control unit 48 also rectifies the correction parameters deduced from the inference result as well as the inference result itself.

A detailed flow of the image editing process in the image editing apparatus described above is explained below.

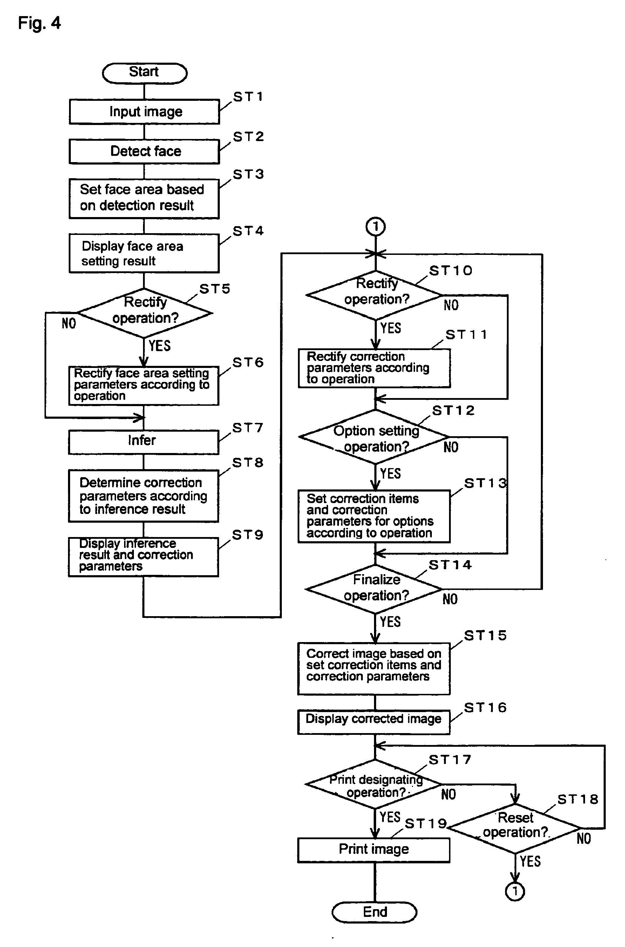

Fig. 4 shows a series of steps up to printing an image using the functions of each processing unit shown in Fig. 2. In the description that follows, each step is designated as "ST".

First, in step ST1, an image to be processed is input and stored in the working area of the memory, and then the process proceeds to step ST2 for executing the face detection process.

In this face detection process, a search area of a predetermined size is scanned on the input image to search for the feature points of the face image. The size of the face image on the image is varied with the distance to the object at the time of image pickup or lens magnification. In the search process, therefore, the input image is repeatedly searched while changing the size of the search area in steps.

In step ST3, a face area making up an area to be processed in the future is set on the face image detected.

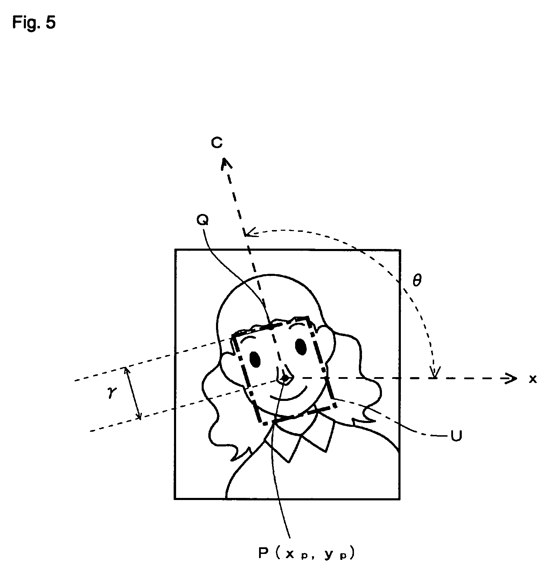

Fig. 5 shows an example setting of the face area and a specific example of each parameter used for the setting. In the shown case, a feature point P corresponding to the highest position of the nose is detected from the feature points in the face image, and the coordinate (x_{P}, y_{P}) of this point P is set as the face detecting position. Also, with this point P as an origin, the boundary between the forehead and the hair is searched for in each direction, and from among the feature points corresponding to the boundaries, a point Q associated with the shortest distance from point P is determined. The distance between this point Q and the origin P is set as a face size r. Further, a vector C directed from point P toward point Q is set, and the angle that the vector C forms with the horizontal direction (x axis) of the image is measured as a face tilt angle θ.

According to this embodiment, the coordinate (x_{P}, y_{P}) of point P, the face size r and the face tilt angle θ are used as parameters for setting the face area. In Fig. 5, character U designates an example of the face area set by each parameter. The size of the face area U is determined based on the face size r, the center of which corresponds to point P, and is set in such a manner that the main axis is tilted by angle θ to the x axis.

Returning to Fig. 4, once the face area is set in this way, the result of setting the face area is displayed as a frame image on the monitor 10 in step ST4. When this image on display is rectified, the parameters for setting the face area are rectified in accordance with the display rectify operation (steps ST5, ST6).

The rectify operation in step ST5 includes the operation of deleting the face area and the operation of setting a new face area as well as the operation of changing the position and size of the face area once set. In step ST6, on the other hand, the process of deleting the parameters and the process of setting a new parameter are executed in addition to the process of changing the values of the parameters for setting the face area.

After rectifying the face area, the finalize operation is performed and then the process proceeds to step ST7, in which the various inference processes are executed for the face area thus finally determined. In the case where the finalize operation is carried out immediately without rectifying the frame image on display in step ST4, the answer in step ST5 is NO, and the process proceeds to step ST7, where the inference process is executed for the face area set in step ST3.

In step ST7, the race, age, sex and the presence or absence of back light are estimated for the face area thus set. The race estimation process can be executed based on the first non-patent reference cited above. According to this embodiment, however, in order to shorten the processing time, the race and the presence or absence of back light are estimated simultaneously using the brightness distribution in the face area.

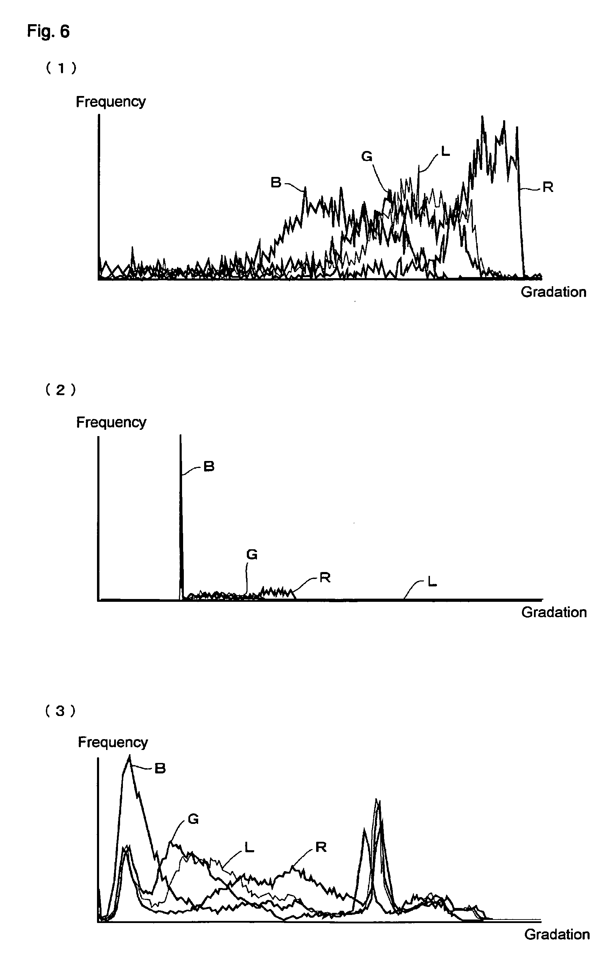

Fig. 6 shows histograms representing three different cases of object and illumination environment detected for each color data of R, G, B and lightness L (weighted average of R, G, B) in the face area. Each histogram is shown on such a scale of gradation that the brightness is shown progressively higher rightward in the page.

Fig. 6(1) is a histogram showing a case in which the image of a yellow person is picked up in the proper illumination environment. In this histogram, the distribution to the bright side is comparatively high for each color data. Especially, the intensity of the red color component is emphasized.

Fig. 6(2) is a histogram for a case in which the image of the same yellow person as in Fig. 6(1) is picked up in back light. In this histogram, the appearance of each color data is remarkably reduced and concentrated on dark side as compared with Fig. 6(1).

Fig. 6(3) is a histogram for a case in which the image of a black person is picked up in the proper illumination environment. In this histogram, a distribution having peaks on both dark and bright sides is obtained (the dark side is considered to correspond to the skin, and the bright side to eyes and teeth).

According to this embodiment, templates of the brightness histogram are prepared for a plurality of image pickup environments on different illumination conditions for each race. A histogram detected for a face area to be processed is compared with each template thereby to estimate the race and the presence or absence of back light. The histogram described above is not necessarily limited to the whole face area. By detecting and using the brightness distribution for a local area such as eyes or mouth for the identification process, for example, a more accurate estimation result is obtained.

On the other hand, the age and sex are estimated, as described in the second non-patent reference, by a method for an estimation system called the support vector machine using the feature amounts of the feature points of each organ. Nevertheless, the invention is not necessarily limited to this method.

Returning to Fig. 4, upon complete series of the inference process, the setting table in the memory 5 is accessed based on the inference result in step ST8 thereby to determine the correction parameters.

In step ST9, the information indicating the inference result and the contents of the correction parameters are displayed with the input image. On this display screen, a predetermined inference result or correction parameter is designated and the rectify operation performed. Then, the answer in step ST10 turns YES, and in step ST11, the correction parameter is rectified in accordance with the rectify operation.

In step ST11, the mouse cursor is moved to approach to the face image on the display screen. Then, the information indicating the inference result and the correction parameters corresponding to the particular face image are displayed to make ready for rectification. The correction parameters displayed in this case are desirably not specific numerical values, but replaced with concrete contents of correction such as "whiten skin", "obtain ordinary skin color" or "obtain blackish skin color".

Further, in the case where the operation for designating an optional correction is performed, the answer in step ST12 turns YES and the process proceeds to step ST13, where in accordance with the user operation, the optional correction items and correction parameters are set.

Also in step ST13, concrete contents of correction such as "remove spot" or "smooth skin" are displayed in a menu, and further, a menu designating more detailed contents of correction is displayed in accordance with the select operation. Then, the correction items and the correction parameters meeting the user demand are easily set.

The inference result and the correction parameters can be rectified or the optional correction can be set repeatedly. Once the user performs the finalize operation at a predetermined time point, the answer in step ST14 turns YES, so that in step ST15, the image is corrected based on the correction items and the correction parameters set at the particular time point.

After that, in step ST16, the image after correction (hereinafter referred to as "the corrected image") is displayed. According to this embodiment, if the corrected image is different from the one intended for by the user, the print designating operation or the reset operation is accepted to execute recorrection by changing the correction items and the correction parameters. After the reset operation, the answer in step ST17 turns NO while the answer in step ST18 turns YES, and the process returns to step ST10. Thus, the inference result and the correction items are rectified again or the optional correction is added. In accordance with a repeated finalize operation, step ST15 is executed thereby to recorrect the input image.

In the case where the print designating operation is performed in response to the display of the corrected image at a predetermined time point, the answer in step ST17 turns YES and the process proceeds to step ST19. In step ST19, the corrected image obtained at this particular time point is output to the printer 11 to execute the printing process.

According to the steps shown in Fig. 4, from the contents of correction set as a standard, those suitable to the race, age and sex of the object are automatically selected and printed as a photo. Also, in the case where the inference result has an error or the standard correction process is other than intended for by the user, they can be easily rectified appropriately using the user interface. Thus, a highly accurate correction process can be readily executed.

Next, an explanation is given about the steps of executing the correction process having the same contents for the face image that has been processed in the past, by utilizing the information registered in the user data base 47.

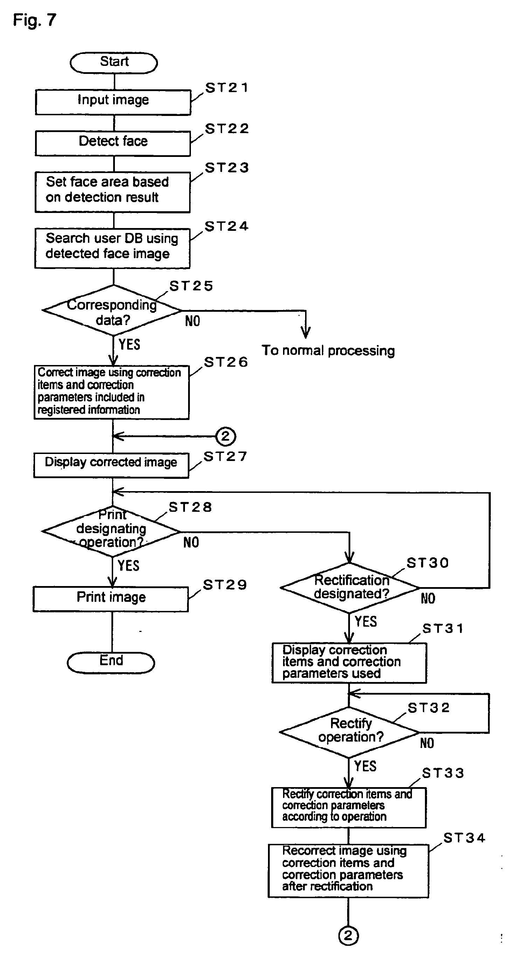

In the steps shown in Fig. 7, the registered information corresponding to a face image which may be detected is searched for, and in the presence of the registered information, the correction process is executed using the correction items and the correction parameters included in the particular information.

First, in steps ST21 to ST23, a face image in the input image is detected and a face area is set by the same process as in steps ST1 to ST3 in Fig. 4. In step ST24, the user data base 47 is searched using the feature amounts of the face image detected. In the case where the registered information containing the feature amounts analogous to those of the face image is found, the process proceeds to step ST26 from ST25, and the image in the face area is corrected based on the correction items and the correction parameters included in the registered information. Before executing this correction, the index information (such as the name of an individual person) for the registered information which has been hit is desirably displayed and checked by the user.

In step ST27, the corrected image obtained by the correction process is displayed. Also according to this embodiment, in the case where the corrected image is not the one intended for by the user, the recorrection is possible in response to the rectification designation. In the case where the rectification designating operation is performed, the answer in step ST28 turns NO and that in step ST30 turns YES. Then, the process proceeds to step ST31 where the correction items and the correction parameters used in the correction process are displayed. The information thus displayed are rectified, and the process proceeds from step ST32 to ST33, where the correction items and the correction parameters are rectified in accordance with the rectify operation. In step ST34, the input image is recorrected based on the correction items and the correction parameters thus rectified, and the process returns to step ST27.

In the case where the print designating operation is performed for the corrected image displayed at a predetermined time point, the answer in step ST28 turns YES and the process proceeds to step ST29 where the process of printing the corrected image is executed.

In the case where the registered information corresponding to the detected face image is not found in the search process of step ST24, on the other hand, the answer in step ST25 turns NO, in which case the steps including and subsequent to step ST4 shown in Fig. 4 are executed.

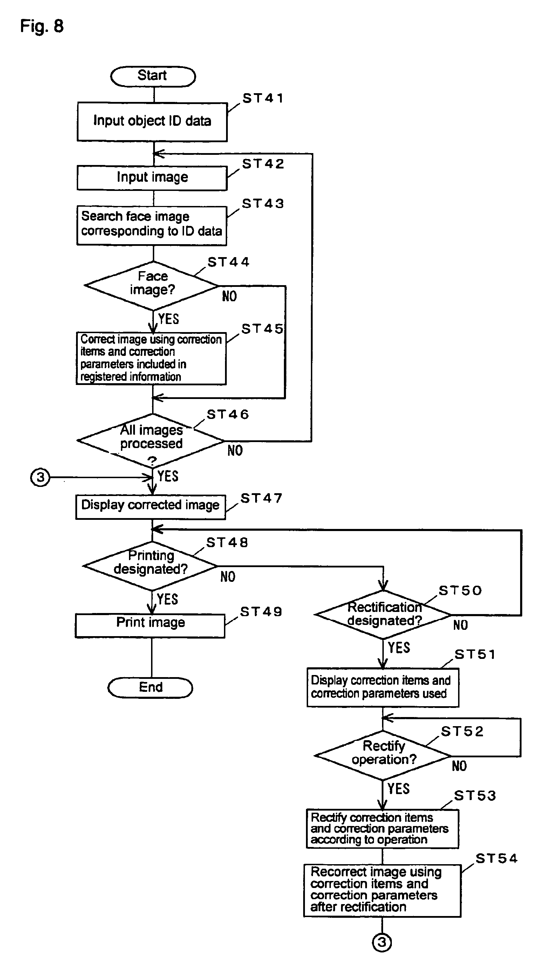

Next, in the steps shown in Fig. 8, on the assumption that the information on a person constituting an object of the correction process is registered in the user data base 47, the identification data for identifying the particular person is input thereby to designate the person constituting the object of correction. Further, in these steps, a plurality of images are input sequentially and from among them, an image containing the designated person is detected and corrected in accordance with the registered information.

The identification data correspond to the index information of the user data base, and input before the image in the first step ST41. Though not shown in Fig. 8, the CPU 4 searches the user data base 47 in response to an input of the identification data thereby to specify the corresponding registered data.

After the image to be processed is input in step ST42, the input image is searched for by the feature amounts contained in the registered information corresponding to the identification data in step ST43. In the case where an image area having the feature amounts analogous to the registered information is found by the search process, the particular area is specified as the face image. As a result, the answer in step ST44 turns YES and the process proceeds to step ST45 where the correction process is executed using the correction items and the correction parameters contained in the particular registered information.

After that, the process returns from ST46 to ST42. While retrieving the images to be processed sequentially, the face detection process and the correction process are executed. In the case where an image area having the feature amounts analogous to the registered information is not found in the search process of step ST43, on the other hand, the answer in step ST44 turns NO, and the correction process in step ST45 is skipped.

Upon complete processing for all the images, the answer in step ST46 turns YES, and the process proceeds to step ST47 to display a corrected image. According to this embodiment, as in the embodiment shown in Fig. 7, in the case where a rectification designating operation is performed, the rectify operation is permitted by displaying the correction items and the correction parameters used, and in accordance with the rectify operation, the correction items and the correction parameters are rectified thereby to recorrect the image (steps ST50 to ST54). When a print designating operation is performed at a predetermined time point, the answer in step ST48 turns YES and the process proceeds to step ST49 thereby to execute the process of printing the corrected image.

In the steps including and subsequent to step ST48, to simplify the explanation, the same sequence is shown to be followed as in the steps including and subsequent to step ST28 of Fig. 7. In actual processing, however, the images corrected are desirably displayed one by one to perform the print and recorrect operation individually.

According to the embodiments shown in Figs. 7 and 8, with regard to any person registered in the user data base 47 who has been an object of correction in the past, the contents of correction executed in the past can be accessed and a similar correction process can be executed. Once the detailed contents of correction are set and registered, therefore, the correction process of the same contents can be quickly executed. According to the embodiment shown in Fig. 8, on the other hand, an image containing a person to be processed is corrected by being automatically selected from a plurality of images.

In Figs. 7 and 8, assume that the correction items and the correction parameters are rectified after executing the correction process according to the registered contents of correction. The registered information can be rewritten by the particular rectified correction items and the correction parameters. In all the embodiments, the image is always printed by the print designating operation in the last stage. Nevertheless, the invention is not limited to this process, but the print process can be suspended by cancellation.

In the case where the feature amounts and the unique contents of correction of the face image of each person are registered as described above, only the face image detection process is executed for the image registered for the first time while concrete correction items and correction parameters may be input by the user. In such a case, instead of the setting by menu display described above, the user may be rendered to correct the input image using the functions of the image correction software or the like, and the correction items and the correction parameters corresponding to the particular contents of correction are registered.

In all the embodiments described above, the image is processed by the image editing apparatus 100 having the configuration shown in Fig. 1. This type of image processing, however, can be executed also on a computer network such as the internet and not limited to the use of a self-standing device.

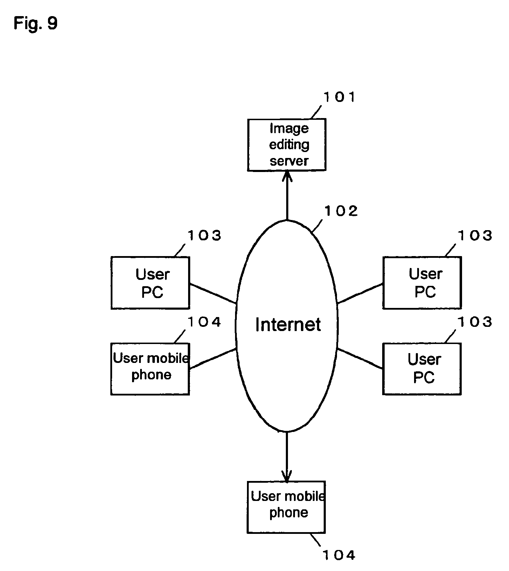

Fig. 9 shows an example of the image editing system using the internet. In Fig. 9, a user PC (personal computer) 103 and a user mobile phone 104 are terminal devices used by given users, and set to communicate with an image editing server 101 through an internet 102.

The image editing server 101 is equipped with the various functions shown in Fig. 2, and by receiving the images transmitted from the user terminal devices 103, 104, can execute a similar process to the process executed in the embodiments shown in Figs. 7, 8 and 9. In this system, the image acquisition unit 41 is set to receive the image transmitted from the internet 102. Also, the user interface control unit 48 is set to distribute the web pages having an image and a menu screen for various operations to the terminal devices 103, 104 through the internet 102.

The corrected image output unit 46 can transmit the image after correction to the terminal devices 103, 104. Also, this system can be set to be utilized on membership basis. In that case, the image editing server 101 or a business management server (not shown) connected to the image editing server 101 is equipped with a data base of member addresses or the information such as the address is transmitted from each user. In this way, like the image editing apparatus 100 shown in Fig. 1, a corrected image is printed by the corrected image output unit 46, and the resulting photo can be sent to the user. The origin and destination of the image are not limited to the user, but may be a third party designated by the user.

With the image editing system described above, the user having a personal computer reads the image data by connecting a digital camera or a memory card to the computer, and transmitting the image to the image editing server 101, can receive the editing service. Also, a user having a mobile phone with a built-in camera function, after picking up an image, sends the image directly to the image editing server 101 to receive the editing service. In this way, the user can easily request the correction of the image picked up by himself by communication using the internet 102 on the one hand and can enjoy the great convenience of easily acquiring a properly corrected face image on the other hand.

An image linked with the information indicating the result of the process of detecting and inferring the face image can be input in advance to the image editing apparatus 100 of Fig. 1 and the image editing server 101 of Fig. 9. With this image, the process of detecting a face image can be easily executed using the link information, after which the contents of correction can be quickly determined based on the inference information for an increased processing speed.

It will thus be understood from the foregoing description that according to this invention, a face image of an object is detected and the image correction process is executed for the face image after determining the proper contents of correction. Thus, the face image can be corrected to an image similar to a clear, real image of each object. Also, by rectifying the inference result and the contents of correction appropriately, detailed correction can be readily carried out to meet the demand of each person.

## Claims

1. An image editing apparatus (100) comprising:
an image input part (6) for inputting a current image picked up of a person;
a face image detection part (42) for detecting a face image area of the person contained in the input image;
an inference part (44) for inferring attributes of the current face image such as sex, age or race based on feature amounts in an image area containing the face image area detected by the face image detection part (42);
a determining part for determining the contents of a correction process of the current face image based on the result of inference by the inference part (44);
a face image correction part (45) for executing the correction process on the current face image according to the contents determined by the determining part; and
an image output part (46) for outputting an image corrected by the face image correction part (45),
**characterized in that** the inference part (44)
estimates a histogram distribution of the brightness L in the face image area or a local area containing all or part of the face image area, under a plurality of environments of different illumination conditions and,
infers the race, by comparing the histogram distribution of brightness L of the face image area or of local area containing all or part of the face image area with histogram distributions of the brightness L of registered templates.

2. The image editing apparatus (100) according to claim 1,
wherein the face image detection part (42) detects a feature point P corresponding to the highest position of the nose in the face image, and wherein the coordinates (xP, yP) of this point P are set as the face detecting position and wherein, with this point P as an origin, boundaries between the forehead and the hair is searched for in each direction, and from among the feature points corresponding to the boundaries, a point Q associated with the shortest distance from point P is determined and
wherein the distance between this point Q and the origin P is set as a face size r.

3. The image editing apparatus (100) according to one of claim 1, or 2
wherein the face image detection part (42) includes a part for rectifying the result of detection of the face image area in response to the rectify operation for the result of detection of the face image area.

4. The image editing apparatus (100) according to claim 1,
wherein the inference part (44) includes a part for rectifying the inference result in response to the operation of rectifying the inference result.

5. The image editing apparatus (100) according to claim 1,
wherein the face image correction part (45) includes a part for executing the recorrection of the face image after the correction process based on the rectified contents in response to the operation of rectifying the contents of the correction, and
wherein the image output part (46) outputs the latest corrected image at the particular time point in response to the finalize operation.

6. The image editing apparatus (100) according to claim 1, further comprising a registration processing part for registering in a memory the registered information on the feature amounts of the face image detected by the face image detection part in correspondence with the contents of correction process executed by the face image correction part,
wherein the face image detection part (42) is set to detect, in accordance with the operation of designating predetermined registered information, a face image area from the input image by the search process using the feature amounts contained in the designated registered information, and
wherein the face image correction part, upon detection of the face image by the search process, executes the correction process on the detected face image according to the contents of correction process contained in the designated registered information.

7. The image editing apparatus (100) according to claim 1 or 2,
wherein the face image detection part (42) detects, upon receipt of an image linked with the information indicating the position of the face image area of an object from the image input part, the face image based on the link information.

8. The image editing apparatus (100) according to claim 1,
wherein the image output part (6) includes a part for printing the face image based on the link information.

9. The image editing apparatus 100) according to any one of claim 1 or 2,
wherein the image input part (6) includes a part for receiving the image to be processed, transmitted through a computer network, and
wherein the image output part (46) is selected one of a part for printing a corrected image and a part for transmitting, through the computer network, the corrected image to selected one of a transmitter of the image and a destination designated by the transmitter.

10. The image editing apparatus (100) according to claim 1 and comprising further:
a registration part for holding registered information including feature amounts of the face image of each of a predetermined number of faces and the information required for correcting the face image in correspondence with the identification information unique to the face; wherein the inference part (44)
estimates further the face by comparing the feature amounts of the face image detected by the face image detection part (42) with the information registered in the registration part; and wherein
the face image correction part (45) executes the process of correcting the detected face image using the registered information of the face estimated by the inference part.

11. An image editing method comprising the steps of:
inputting a current image picked up of a person;
detecting a face image area of the person contained in the input current image;
inferring attributes such as race age or sex of the face image based on feature amounts in an image area containing the detected face image;
determining correction parameters of a correction process of the face image based on the result of the inference process;
executing the correction process on the face image according to the determined correction parameters; and
outputting the corrected face image,
**characterized in that** the interfering step includes estimates a histogram distribution of the brightness L in the face image area or a local area containing all or part of the face image area, under a plurality of environments of different illumination conditions and infers the race, by comparing the histogram distribution of brightness L of the face image area or of local area containing all or part of the face image area with histogram distribution of the brightness L of registered templates.

12. An image editing method according to claim 11 wherein the step of detecting the face of the person comprises the steps of:
detecting a feature point P corresponding to the highest position of the nose in the face image,
setting the coordinates (xP, yP) of this point P as the face detecting position and with this point P as an origin, searching for boundaries between the forehead and
the hair in each direction, and from among the feature points corresponding to the boundaries, determining a point Q associated with the shortest distance from point P and setting the distance between this point Q and the origin P as a face size r.

13. The method according to claim 12 comprising further the step of setting a vector C directed from point P toward point Q and determining a face tilt angle as the angle θ formed between said vector C and the horizontal direction of the current input image.

14. A program for a computer to execute the steps of:
inputting a current image picked up of a person;
detecting a face image of the person contained in the input current image;
inferring attributes such as sex age and race of the face image based on the feature amounts in an image area containing the detected face image;
determining correction parameters of a correction process of the face image based on the result of the inference process;
executing the correction process on the face image according to the determined correction parameters; and
outputting the corrected face image
**characterized in that** the the interfering step of the program includes:
estimates a histogram distribution of the brightness L in the face image area or a local area containing all or part of the face image area, under a plurality of environments of different illumination conditions and
infers the race, by comparing the histogram distribution of brightness L of the face image area or of local area containing all or part of the face image area with histogram distribution of the brightness L of registered templates.

15. The program for a computer according to claim 14 wherein the step of detecting the face of the person comprises the steps of:
- detecting a feature point P corresponding to the highest position of the nose in the face image,
- setting the coordinates (xP, yP) of this point P as the face detecting position and with this point P as an origin, searching for boundaries between the forehead and the hair in each direction, and from among the feature points corresponding to the boundaries, determining a point Q associated with the shortest distance from point P and setting the distance between this point Q and the origin P as a face size r.

16. The method according to claim 14 comprising further the step of setting a vector C directed from point P toward point Q and determining a face tilt angle as the angle θ formed between said vector C and the horizontal direction of the current input image.

## Patentansprüche

1. Bildbearbeitungsvorrichtung (100), umfassend:
ein Bildeingabeteil (6) zum Eingeben eines aktuellen Bildes einer Person; ein Gesichtsbildbestimmungsteil (42) zum Bestimmen eines Gesichtsbildbereichs der Person, enthalten im Eingabebild;
ein Ableitungsteil (44) zum Ableiten von Attributen aus dem aktuellen Gesichtsbild, wie Geschlecht, Alter oder Rasse, basierend auf Merkmalsmengen in einem Bildbereich, enthaltend den Gesichtsbildbereich, bestimmt durch den Gesichtsbildbestimmungsteil (42);
ein Bestimmungsteil zum Bestimmen des Inhalts eines Korrekturverfahrens des aktuellen Gesichtbildes, basierend auf dem Ergebnis der Ableitung durch den Ableitungsteil (44);
ein Gesichtsbildkorrekturteil (45) zum Ausführen des Korrekturverfahrens beim aktuellen Gesichtsbild gemäß dem Inhalt, bestimmt durch den Bestimmungsteil; und
einen Bildausgabeteil (46) zum Ausgeben eines Bilds, korrigiert durch den Gesichtsbildkorrekturteil (45),
**dadurch gekennzeichnet, dass** der Ableitungsteil (44) eine Histogrammverteilung der Helligkeit L im Gesichtsbildbereich oder einem lokalen Bereich, enthaltend den ganzen oder einen Teil des Gesichtsbildbereichs, unter einer Vielzahl von Umgebungen verschiedener Belichtungsbedingungen abschätzt, und
durch Vergleich der Histogrammverteilung der Helligkeit L des Gesichtsbildbereichs oder des lokalen Bereichs, enthaltend den ganzen oder einen Teil des Gesichtsbildbereichs, mit Histogrammverteilungen der Helligkeit L von registrierten Mustern die Rasse ableitet.

2. Bildbearbeitungsvorrichtung (100) gemäß Anspruch 1,
worin der Gesichtsbildbestimmungsteil (42) einen Merkmalspunkt P entsprechend der höchsten Position der Nase im Gesichtsbild bestimmt, und worin die Koordinaten (xP, yP) dieses Punkts P als Gesichtsbestimmungsposition eingestellt werden, und worin mit diesem Punkt P als einem Ursprung Grenzen zwischen der Stirn und dem Haar für jede Richtung gesucht werden, und aus den Merkmalspunkten entsprechend den Grenzen ein Punkt Q, der durch den kürzesten Abstand mit dem Punkt P in Verbindung steht, bestimmt wird, und worin der Abstand zwischen diesem Punkt Q und dem Ursprung P als eine Gesichtsgröße r eingestellt wird.

3. Bildbearbeitungsvorrichtung (100) gemäß einem der Ansprüche 1 oder 2,
worin der Gesichtsbildbestimmungsteil (42) einen Teil zur Verbesserung des Ergebnisses der Bestimmung des Gesichtsbildbereichs in Reaktion auf den Verbesserungsablauf für das Ergebnis der Bestimmung des Gesichtsbildbereiches enthält.

4. Bildbearbeitungsvorrichtung (100) gemäß Anspruch 1,
worin der Ableitungsteil (44) einen Teil zum Verbessern des Ableitungsergebnisses in Reaktion auf den Ablauf der Verbesserung des Ableitungsergebnisses enthält.

5. Bildbearbeitungsvorrichtung (100) gemäß Anspruch 1,
worin der Gesichtsbildkorrekturteil (45) einen Teil zum Ausführen der erneuten Korrektur des Gesichtsbildes nach dem Korrekturverfahren, basierend auf dem verbesserten Inhalt in Reaktion auf den Ablauf der Verbesserung des Inhalts der Korrektur enthält, und
worin der Bildausgabeteil (46) das letzte korrigierte Bild zu einem speziellen Zeitpunkt in Reaktion auf den fertiggestellten Vorgang ausgibt.

6. Bildbearbeitungsvorrichtung (100) gemäß Anspruch 1, weiterhin umfassend einen Registrierungsbearbeitungsteil zum Registrieren der registrierten Information über die Merkmalsmengen des Gesichtsbildes, bestimmt durch den Gesichtsbildbestimmungsteil gemäß dem Inhalt des Korrekturverfahrens, durchgeführt durch den Gesichtsbildkorrekturteil, in einem Speicher,
worin der Gesichtsbildbestimmungsteil (42) eingestellt ist, um, gemäß der Bezeichnung vorbestimmter registrierter Informationen, einen Gesichtsbildbereich aus dem Eingabebild durch ein Suchverfahren unter Verwendung der Merkmalsmengen, enthalten in der bezeichneten registrierten Information zu bestimmen, und
worin der Gesichtsbildkorrekturteil bei Bestimmung des Gesichtsbildes durch das Suchverfahren das Korrekturverfahren am bestimmten Gesichtsbild gemäß dem Inhalt des Korrekturverfahrens, enthalten in der bezeichneten registrierten Information, ausführt.

7. Bildbearbeitungsvorrichtung (100) gemäß Anspruch 1 oder 2,
worin der Gesichtsbildbestimmungsteil (42) bei Empfang eines Bildes, verknüpft mit der Information, die die Position des Gesichtsbildbereiches am Objekt vom Bildeingabeteil angibt, das Gesichtsbild basierend auf der Verknüpfungsinformation bestimmt.

8. Bildbearbeitungsvorrichtung (100) gemäß Anspruch 1,
worin der Bildausgabeteil (6) einen Teil zum Drucken des Gesichtsbildes, basierend auf der Verknüpfungsinformation, enthält.

9. Bildbearbeitungsvorrichtung (100) gemäß irgendeinem der Ansprüche 1 oder 2,
worin der Bildeingabeteil (6) einen Teil zum Empfang des zu verarbeitenden Bildes, das durch ein Computer-Netzwerk übermittelt wurde, enthält, und
worin der Bildausgabeteil (46) ausgewählt ist aus einem Teil zum Drucken eines korrigierten Bildes oder einem Teil zum Übermitteln des korrigierten Bildes durch das Computer-Netzwerk zu einem ausgewählten Transmitter des Bildes oder eine durch den Transmitter bezeichnete Bestimmung.

10. Bildbearbeitungsvorrichtung (100) gemäß Anspruch 1 und weiterhin umfassend:
einen Registrierungsteil zum Halten registrierter Information, einschließlich Merkmalsmengen des Gesichtsbildes jeder vorbestimmten Anzahl von Gesichtern und die Information, die zur Korrektur des Gesichtsbildes erforderlich ist, gemäß der Identifikationsinformation, die für das Gesicht einzigartig ist; worin der Ableitungsteil (44)
weiterhin das Gesicht durch Vergleich der Merkmalsmengen des Gesichtsbildes, bestimmt durch den Gesichtsbildbestimmungsteil (42), mit der im Registrierungsteil registrierten Information abschätzt, und worin
der Gesichtsbildkorrekturteil (45) das Verfahren zur Korrektur des bestimmten Gesichtsbildes unter Verwendung der registrierten Information des Gesichts, abgeschätzt durch den Ableitungsteil, ausführt.

11. Bildbearbeitungsvorrichtung, umfassend die Schritte:
Eingeben eines aktuellen Bildes einer Person;
Bestimmen eines Gesichtsbildbereichs der Person, enthalten in der Eingabe des aktuellen Bildes;
Ableiten von Attributen, wie Rasse, Alter oder Geschlecht des Gesichtsbilds, basierend auf Merkmalsmengen in einem Bildbereich, enthaltend das bestimmte Gesichtsbild;
Bestimmen von Korrekturparametern eines Korrekturverfahrens des Gesichtsbildes, basierend auf dem Ergebnis des Ableitungsverfahrens; Ausführen des Korrekturverfahrens am Gesichtsbild gemäß den bestimmten Korrekturparametern; und
Ausgeben des korrigierten Gesichtsbildes;
**dadurch gekennzeichnet, dass** der Ableitungsschritt enthält: Abschätzen einer Histogrammverteilung der Helligkeit L im Gesichtsbildbereich oder einem lokalen Bereich, enthaltend den ganzen oder einen Teil des Gesichtsbildbereiches unter einer Vielzahl von Umgebungen verschiedener Belichtungszustände; und
Ableiten der Rasse durch Vergleichen der Histogrammverteilung der Helligkeit L des Gesichtsbildbereichs oder eines lokalen Bereichs, enthaltend den ganzen oder einen Teil des Gesichtsbildbereichs mit einer Histogrammverteilung der Helligkeit L von registrierten Mustern.

12. Bildbearbeitungsverfahren gemäß Anspruch 11, worin der Schritt des Bestimmens des Gesichts der Person die Schritte umfasst:
Bestimmen eines Merkmalpunkts P entsprechend der höchsten Position der Nase im Gesichtsbild,
Einstellen der Koordinaten (xP, yP) des Punktes P als Gesichtsbestimmungsposition, und mit diesem Punkt P als Ursprung Suchen nach Grenzen zwischen der Stirn und dem Haar in jeder Richtung, und aus den Merkmalspunkten entsprechend den Grenzen Bestimmen eines Punkts Q, der durch den kürzesten Abstand mit dem Punkt P in Verbindung steht, und Einstellen des Abstands zwischen diesem Punkt Q und dem Ursprung P als einer Gesichtsgröße r.

13. Verfahren gemäß Anspruch 12, umfassend weiterhin den Schritt des Einstellens eines Vektors C, gerichtet vom Punkt P in Richtung auf den Punkt Q, und Bestimmen eines Gesichtsneigungswinkels als dem Winkel θ, gebildet zwischen dem Vektor C und der horizontalen Richtung des aktuellen Eingabebilds.

14. Programm für einen Computer zum Ausführen der Schritte:
Eingeben eines aktuellen Bilds einer Person;
Bestimmen eines Gesichtsbildes der Person, enthalten in der Eingabe des aktuellen Bildes;
Ableiten von Attributen, wie Geschlecht, Alter und Rasse des Gesichtsbildes, basierend auf den Merkmalsmengen in einem Bildbereich, enthaltend das bestimmte Gesichtsbild;
Bestimmen von Korrekturparametern eines Korrekturverfahrens des Gesichtsbildes, basierend auf dem Ergebnis des Ableitungsverfahrens;
Ausführen des Korrekturverfahrens am Gesichtsbild gemäß den bestimmten Korrekturparametern und
Ausgeben des korrigierten Gesichtsbildes,
**dadurch gekennzeichnet, dass** der Ableitungsschritt des Programms umfasst:
Abschätzen einer Histogrammverteilung der Helligkeit L im Gesichtsbildbereich oder einem lokalen Bereich, enthaltend den ganzen oder einen Teil des Gesichtsbildbereichs, unter einer Vielzahl von Umgebungen verschiedener Belichtungszustände, und
Ableiten der Rasse durch Vergleichen der Histogrammverteilung der Helligkeit L des Gesichtsbildbereichs oder eines lokalen Bereichs, enthaltend den ganzen oder einen Teil des Gesichtsbildbereichs mit einer Histogrammverteilung der Helligkeit L von registrierten Mustern.

15. Programm für einen Computer gemäß Anspruch 14, worin der Schritt des Bestimmens des Gesichts der Person die Schritte umfasst:
- Bestimmen eines Merkmalpunkts P entsprechend der höchsten Position der Nase im Gesichtsbild,
- Einstellen der Koordinaten (xP, yP) dieses Punkts P als der Gesichtsbestimmungsposition, und mit diesem Punkt P als einen Ursprung Suchen nach Grenzen zwischen der Stirn und dem Haar in jede Richtung, und aus den Merkmalspunkten entsprechend der Grenzen Bestimmen eines Punkts Q, der durch den kürzesten Abstand mit dem Punkt P in Verbindung steht, und Einstellen des Abstands zwischen diesem Punkt Q und dem Ursprung P als einer Gesichtsgröße r.

16. Verfahren gemäß Anspruch 14, umfassend weiterhin den Schritt des Einstellens eines Vektors C, gerichtet vom Punkt P in Richtung auf den Punkt Q, und Bestimmen eines Gesichtsneigungswinkels als den Winkel θ, gebildet zwischen dem Vektor C und der horizontalen Richtung des aktuellen Eingabebildes.

## Revendications

1. Appareil d'édition d'image (100) comprenant :
une partie d'entrée d'image (6) pour entrer une image courante faite d'une personne ;
une partie de détection d'image de visage (42) pour détecter une zone d'image de visage de la personne contenue dans l'image entrée ;
une partie d'inférence (44) pour inférer des attributs de l'image de visage courante tels que le sexe, l'âge ou la race en fonction de valeurs de caractéristiques dans une zone d'image contenant la zone d'image de visage détectée par la partie de détection d'image de visage (42) ;
une partie de détermination pour déterminer les contenus d'un processus de correction de l'image courante de visage en fonction du résultat de l'inférence obtenu par la partie d'inférence (44) ;
une partie de correction d'image de visage (45) pour exécuter le processus de correction sur l'image courante de visage en fonction des contenus déterminés par la partie de détermination ; et
une partie de sortie d'image (46) pour sortir une image corrigée par la partie de correction d'image de visage (45),
**caractérisé en ce que** la partie d'inférence (44)
estime une distribution d'histogramme de la luminosité L dans la zone d'image de visage ou une zone locale contenant toute la zone d'image de visage ou une partie de celle-ci, sous une pluralité d'environnements de conditions d'illumination différentes et,
infère la race, en comparant la distribution d'histogramme de luminosité L de la zone d'image de visage ou de la zone locale contenant toute la zone d'image de visage ou une partie de celle-ci avec les distributions d'histogramme de la luminosité L de modèles enregistrés.

2. Appareil d'édition d'image (100) selon la revendication 1,
dans lequel la partie de détection d'image de visage (42) détecte une point caractéristique P correspondant à la position la plus élevée du nez dans l'image de visage, et dans lequel les coordonnées (xP, yP) de ce point P sont paramétrées comme la position de détection du visage et dans lequel, avec ce point P comme origine, des limites entre le front et les cheveux sont recherchées dans chaque direction, et parmi les points caractéristiques correspondants aux limites, un point Q associé à la distance la plus courte du point P est déterminé et dans lequel la distance entre ce point Q et P d'origine est paramétrée comme une taille de visage r.

3. Appareil d'édition d'image (100) selon l'une des revendications 1 ou 2,
dans lequel la partie de détection d'image de visage (42) comprend une partie pour rectifier le résultat de détection de la zone d'image de visage en réponse à l'opération de rectification du résultat de détection de la zone d'image de visage.

4. Appareil d'édition d'image (100) selon la revendication 1,
dans lequel la partie d'inférence (44) comprend une partie pour rectifier le résultat d'inférence en réponse à l'opération de rectification du résultat d'inférence.

5. Appareil d'édition d'image (100) selon la revendication 1,
dans lequel la partie de correction d'image de visage (45) comprend une partie pour exécuter la recorrection de l'image de visage après le processus de correction fondé sur les contenus rectifiés en réponse à l'opération de rectification des contenus de la correction, et
dans lequel la partie de sortie d'image (46) sort l'image corrigée la plus récente au point de temps particulier en réponse à l'opération finalisée.

6. Appareil d'édition d'image (100) selon la revendication 1, comprenant en outre une partie de traitement d'enregistrement pour enregistrer dans une mémoire l'information enregistrée sur les valeurs caractéristiques de l'image de visage détectées par la partie de détection d'image de visage en correspondance avec les contenus du processus de correction exécuté par la partie de correction d'image de visage,
dans lequel la partie de détection d'image de visage (42) est paramétrée pour détecter, selon l'opération de conception d'informations enregistrées prédéterminées, une zone d'image de visage de l'image d'entrée par le processus de recherche à l'aide de valeurs caractéristiques contenues dans les informations enregistrées désignées, et
dans lequel la partie de correction d'image de visage, lors de la détection de l'image de visage par le processus de recherche, exécute le processus de correction sur l'image de visage détectée selon les contenus du processus de correction contenus dans les informations enregistrées désignées.

7. Appareil d'édition d'image (100) selon la revendication 1 ou la revendication 2,
dans lequel la partie de détection d'image de visage (42) détecte l'image de visage en fonction d'informations de lien, sur réception d'une image liée à des informations indiquant la position de la zone d'image de visage d'un objet provenant de la partie d'entrée d'image,.

8. Appareil d'édition d'image (100) selon la revendication 1,
dans lequel la partie de sortie d'image (6) comprend une partie pour imprimer l'image de visage en fonction des informations de lien.

9. Appareil d'édition d'image (100) selon l'une quelconque des revendications 1 ou 2,
dans lequel la partie d'entrée d'image (6) comprend une partie pour recevoir l'image à traiter, transmise via un réseau informatique, et
dans lequel la partie de sortie d'image (46) est une partie sélectionnée parmi une partie pour imprimer une image corrigée et une partie pour transmettre l'image corrigée via un réseau informatique à l'un sélectionné parmi un émetteur de l'image et une destination désignée par l'émetteur.

10. Appareil d'édition d'image (100) selon la revendication 1, et comprenant en outre :
une partie d'enregistrement pour détenir des informations enregistrées incluant des valeurs caractéristiques de l'image de visage de chacun d'un nombre prédéterminé de visages et les informations requises pour corriger l'image de visage en correspondance avec les informations d'identification uniques au visage ; dans lequel la partie d'inférence (44)
poursuit l'estimation de visage en comparant les valeurs caractéristiques de l'image de visage détectée par la partie de détection de l'image de visage (42) avec les informations enregistrées dans la partie d'enregistrement ; et dans lequel
la partie de correction d'image de visage (45) exécute le processus de correction de l'image de visage détectée en utilisant les informations enregistrées du visage estimées par la partie d'inférence.

11. Procédé d'édition d'image comprenant les étapes consistant à :
entrer une image courante d'une personne ;
détecter une zone d'image de visage de la personne contenue dans l'image courante entrée ;
inférer des attributs tels que la race, l'âge ou le sexe de l'image de visage en fonction de valeurs caractéristiques dans une zone d'image contenant l'image de visage détectée ;
déterminer des paramètres de correction d'un processus de correction de l'image de visage en fonction du résultat du processus d'inférence ;
exécuter le processus de correction de l'image de visage selon les paramètres de correction déterminés ; et
sortir l'image de visage corrigée,
**caractérisé en ce que** l'étape d'inférence comprend l'estimation d'une distribution d'histogramme de la luminosité L dans la zone d'image de visage ou dans une zone locale contenant toute la zone d'image de visage ou une partie de celle-ci, sous une pluralité d'environnements de conditions d'illumination différentes et
infère la race, en comparant la distribution d'histogramme de la luminosité L de la zone d'image de visage ou d'une zone locale contenant toute la zone d'image de visage ou une partie de celle-ci avec une distribution d'histogramme de la luminosité L de modèles enregistrés.

12. Procédé d'édition d'image selon la revendication 11, dans lequel l'étape consistant à détecter le visage de la personne comprend les étapes consistant à :
détecter un point caractéristique P correspondant à la position la plus élevée du nez dans l'image de visage,
paramétrer les coordonnées (xP, yP) de ce point P comme la position de détection de visage et avec ce point P comme origine, rechercher des limites entre le front et les cheveux dans chaque direction, et parmi les points caractéristiques correspondant aux limites, déterminer un point Q associé à la distance la plus courte du point P et paramétrer la distance entre ce point Q et le point P d'origine comme une taille de visage r.

13. Procédé selon la revendication 12, comprenant en outre l'étape consistant à paramétrer un vecteur C dirigé du point P vers le point Q et déterminer un angle d'inclinaison du visage comme étant l'angle θ formé entre ledit vecteur C et la direction horizontale de l'image d'entrée courante.

14. Programme pour un ordinateur afin d'exécuter les étapes consistant à :
entrer une image courante d'une personne ;
détecter une image de visage de la personne contenue dans l'image courante entrée ;
inférer des attributs tels que le sexe, l'âge et la race, de l'image de visage en fonction de valeurs caractéristiques dans une zone d'image contenant l'image de visage détectée ;
déterminer des paramètres de correction d'un processus de correction de l'image de visage en fonction du résultat du processus d'inférence ;
exécuter le processus de correction sur l'image de visage selon les paramètres de correction déterminés ; et
sortir l'image de visage corrigée
**caractérisé en ce que** l'étape d'inférence du programme comprend les étapes consistant à :
estimer une distribution d'histogramme de la luminosité L dans la zone d'image de visage ou une zone locale contenant toute la zone d'image de visage ou une partie de celle-ci, sous une pluralité d'environnements de conditions d'illumination différentes et
inférer la race, en comparant la distribution d'histogramme de la luminosité L de la zone d'image de visage ou d'une zone locale contenant toute la zone d'image de visage ou une partie de celle-ci avec la distribution d'histogramme de la luminosité L de modèles enregistrés.

15. Programme pour un ordinateur selon la revendication 14, dans lequel l'étape consistant à détecter le visage de la personne comprend les étapes consistant à :
détecter un point caractéristique P correspondant à la position la plus élevée du nez dans l'image de visage,
paramétrer les coordonnées (xP, yP) de ce point P comme étant la position de détection du visage et avec ce point P comme origine, rechercher des limites entre le front et les cheveux dans chaque direction, et parmi les points caractéristiques correspondant aux limites, déterminer un point Q associé à la distance la plus courte du point P et paramétrer la distance entre ce point Q et le point P d'origine comme une taille de visage r.

16. Procédé selon la revendication 14, comprenant en outre l'étape consistant à paramétrer un vecteur C dirigé du point P vers le point Q et à déterminer un angle d'inclinaison du visage comme étant l'angle θ formé entre ledit vecteur C et la direction horizontale de l'image d'entrée courante.
